# FASCICULE DE BREVET EUROPEEN

(11) **EP 0 424 826 B1**
(45) Date de publication et mention de la délivrance du brevet: **11.01.1995**
(21) Numéro de dépôt: 90120129.3
(22) Date de dépôt: 19.10.1990
(51) Int. Cl.: F02D 19/06

(54) **Procédé d'alimentation d'un moteur à combustion interne avec plusieurs carburants**
Verfahren zum Zuführen von mehreren Kraftstoffen in eine Brennkraftmaschine
Method of feeding an internal combustion engine with more than one fuel

(30) Priorité: 25.10.1989 FR 8914009
(43) Date de publication de la demande: 02.05.1991
(73) Titulaire: S.E.M.T. Pielstick, 93200 Saint Denis (FR)
(72) Inventeur: Bousseau, Pierre, F-92400 Courbevoie (FR)
(74) Mandataire: Weinmiller, Jürgen

(56) Documents cités:
- EP-A- 0 069 717
- WO-A-84/01339
- GB-A- 547 894
- GB-A- 738 451

## Description

La présente invention concerne un moteur à combustion interne, pour la propulsion de navires transportant un gaz combustible, et plus particulièrement de navires méthaniers.

Dans ce type de navires, le méthane est stocké sous forme liquide et inévitablement une évaporation permanente se produit durant le transport.

On connaît des navires équipés de moteurs permettant d'utiliser le gaz naturel évaporé. Dans ce cas, les moteurs utilisent deux combustibles, l'un gazeux et l'autre liquide, dans des proportions variables, comme cela est par exemple connu de EP-A-0 069 717 on de WO-A-84/0139

Dans la pratique, l'utilisation d'une proportion de combustible gazeux comprise entre 30 % et 70 % conduit à des combustions anormales difficiles à maîtriser. L'invention se propose de remédier à l'inconvénient cité ci-dessus en prévoyant une partition judicieuse de l'ensemble des cylindres en fonction de la disponibilité du combustible gazeux qui est alors utilisé dans des proportions garantissant une bonne combustion. Une partition des cylindres d'un moteur est par ailleurs connue, mais dans un autre but: GB-A-738 451 propose un moteur ayant deux groupes de cylindres, l'un comportant les cylindres ayant un chemisage neuf, alimentés en huile légère, puis après rodage, en huile lourde, et l'autre groupe, comportant des cylindres au chemisage déjà rodé, fonctionnant en permanence à l'huile lourde.

La présente invention a pour objet un procédé d'alimentation d'un moteur à combustible comprenant deux groupes de cylindres pour la propulsion de navires transportant un gaz combustible consistant à alimenter un premier groupe de cylindres par un même combustible, et à alimenter l'autre groupe de cylindres, sélectivement, soit par ce même combustible, soit par un combustible différent.

Selon l'invention, le procédé consiste à alimenter le premier groupe de cylindres par un combustible par exemple liquide.

Selon l'invention, le procédé peut également consister à alimenter le premier groupe de cylindres par un combustible gazeux.

L'invention a également pour objet un procédé d'alimentation d'un moteur à combustible interne pour la propulsion de navires transportant un gaz combustible, le moteur comprenant trois groupes de cylindres, consistant à alimenter ledit premier et deuxième groupes de cylindres toujours par un même combustible, ledit premier groupe de cylindres étant alimenté par un combustible gazeux et ledit deuxième groupe de cylindres étant alimenté par un combustible liquide, et consistant à alimenter ledit troisième groupe de cylindres sélectivement soit par ledit combustible liquide, soit par ledit combustible gazeux.

Selon l'invention, le procédé consiste à regrouper les premier et troisième groupes de cylindres en un premier moteur et le deuxième groupe de cylindres en un deuxième moteur.

L'invention a également pour objet un procédé d'alimentation d'un moteur à combustion interne pour la propulsion de navires transportant un gaz combustible, ce moteur comprenant quatre groupes de cylindres, consistant à alimenter un premier, un deuxième et un troisième groupe de cylindres toujours par un même combustible, le premier groupe de cylindres étant alimenté par un combustible gazeux, les deuxième et troisième groupes de cylindres étant alimentés par un combustible liquide, le quatrième groupe de cylindres étant alimenté sélectivement soit par le combustible liquide, soit par le combustible gazeux, les premier et deuxième groupes de cylindres étant regroupés en un premier moteur, les troisième et quatrième groupes de cylindres étant regroupés en un second moteur.

Il est décrit ci-après, à titre d'exemple et en référence aux dessins annexés, différents exemples de conduite de moteurs à combustion interne selon l'invention.

La figure 1 montre un moteur à deux groupes de cylindres.

La figure 2 montre un ensemble à trois groupes de cylindres.

La figure 3 montre un ensemble à quatre groupes de cylindres.

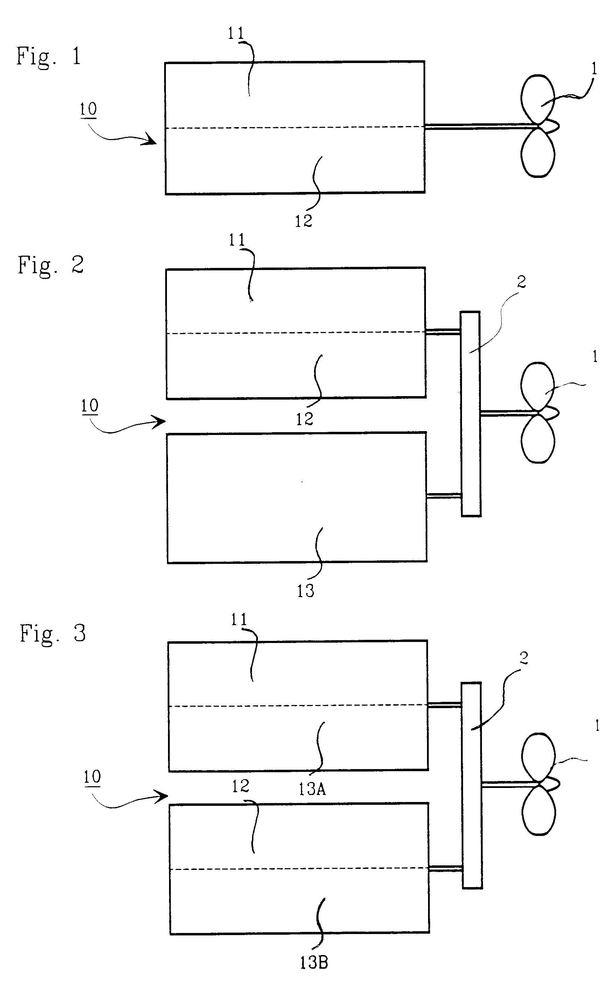

Dans la figure 1, le moteur est référencé 10 tandis que l'hélice est référencée 1.

Le moteur 10 comprend deux groupes de cylindres 11 et 12, un groupe, 11 par exemple, étant toujours alimenté par le même combustible (soit liquide, soit gazeux), l'autre groupe 12 étant alimenté sélectivement par le combustible liquide ou par le combustible gazeux.

Dans la figure 1, le moteur peut être constitué, par exemple, par deux rangées de cylindres en vé.

L'ensemble de la figure 2, comprend trois groupes de cylindres, un groupe 11 alimenté en permanence par le combustible gazeux, un groupe 12 alimenté sélectivement soit par le combustible liquide, soit par le combustible gazeux, et un groupe 13 alimenté en permanence par le combustible liquide.

Le groupe 11 et le groupe 12 sont réunis pour constituer un premier moteur, le groupe 13 constituant, à lui seul, un deuxième moteur.

Un réducteur 2 transmet la puissance de chacun des moteurs à l'hélice 1. Bien entendu, les trois groupes de cylindres pourraient être regroupés en un seul moteur.

L'ensemble de la figure 3 comprend quatre groupes de cylindres, associés deux à deux pour constituer deux moteurs 11, 13A, et 12, 13B.

Les groupes 13A et 13B sont alimentés par le combustible liquide. Le groupe 11, associé au groupe 13A, est toujours alimenté par le combustible gazeux. Le groupe 12, associé au groupe 13B, est alimentée sélectivement soit par le combustible liquide, soit par le combustible gazeux.

Bien entendu les quatre groupes de cylindres pourraient, en variante, être regroupés en un seul moteur.

## Revendications

1. Procédé d'alimentation d'un moteur à combustible comprenant deux groupes (11, 12) de cylindres pour la propulsion de navires transportant un gaz combustible consistant à alimenter un premier groupe (11) de cylindres par un même combustible, et à alimenter l'autre groupe (12) de cylindres, sélectivement, soit par ce même combustible, soit par un combustible différent.

2. Procédé selon la revendication 1, consistant à alimenter le premier groupe (11) de cylindres par un combustible liquide.

3. Procédé selon la revendication 1, consistant à alimenter le premier groupe (11) de cylindres par un combustible gazeux.

4. Procédé d'alimentation d'un moteur à combustion interne pour la propulsion de navires transportant un gaz combustible, le moteur comprenant trois groupes (11, 12, 13) de cylindres, consistant à alimenter ledit premier (11) et deuxième (13) groupe de cylindres toujours par un même combustible, ledit premier groupe (11) de cylindres étant alimenté par un combustible gazeux et ledit deuxième groupe (13) de cylindres étant alimenté par un combustible liquide, et consistant à alimenter ledit troisième groupe (12) de cylindres sélectivement soit par ledit combustible liquide, soit par ledit combustible gazeux.

5. Procédé selon la revendication 4, consistant à regrouper les premier (11) et troisième (12) groupes de cylindres en un premier moteur et le deuxième groupe (13) de cylindres en un deuxième moteur.

6. Procédé d'alimentation d'un moteur à combustion interne pour la propulsion de navires transportant un gaz combustible, ce moteur comprenant quatre groupes (11, 12, 13A et 13B) de cylindres, consistant à alimenter un premier (11), un deuxième (13A) et un troisième (13B) groupe de cylindres toujours par un même combustible, le premier groupe (11) de cylindres étant alimenté par un combustible gazeux, les deuxième (13A) et troisième (13B) groupes de cylindres étant alimentés par un combustible liquide, le quatrième groupe (12) de cylindres étant alimenté sélectivement soit par le combustible liquide, soit par le combustible gazeux, les premier (11) et deuxième (13A) groupes de cylindres étant regroupés en un premier moteur, les troisième (13B) et quatrième (12) groupes de cylindres étant regroupés en un second moteur.

## Claims

1. A method of feeding a combustion engine comprising two groups of cylinders (11, 12) for propelling ships transporting a gaseous fuel, consisting in feeding a first group of cylinders (11) with the same fuel, and feeding a second group of cylinders (12) selectively either with said same fuel or else with a different fuel.

2. A method according to claim 1, consisting in feeding the first group of cylinders (11) with a liquid fuel.

3. A method according to claim 1, consisting in feeding the first group of cylinders (11) with a gaseous fuel.

4. A method of feeding an internal combustion engine for propelling ships transporting a gaseous fuel, the engine comprising three groups of cylinders (11, 12, 13), the method consisting in always feeding said first and second groups of cylinders (11, 13) with the same fuel each, said first group of cylinders (11) being fed with a gaseous fuel and said second group of cylinders (13) being fed with a liquid fuel, and consisting in feeding said third group of cylinders (12) selectively either with said liquid fuel, or with said gaseous fuel.

5. A method according to claim 4, consisting in grouping the first and third groups of cylinders (11, 12) together in a first engine and the second group of cylinders (13) in a second engine.

6. The present invention also provides a method of feeding an internal combustion engine for propelling ships transporting a gaseous fuel, the engine comprising four groups of cylinders (11, 12, 13A and 13B), the method consisting in always feeding a first, a second and a third group of cylinders (11, 13A, 13B), with the same fuel each, the first group of cylinders (11) being fed with a gaseous fuel, the second and third groups of cylinders (13A, 13B) being fed with a liquid fuel, and the fourth group of cylinders (12) being fed selectively either with liquid fuel, or with gaseous fuel, the first and second groups of cylinders (11, 13A) being grouped together in a first engine, and the third and fourth groups of cylinders (13B, 12) being grouped together in a second engine.

## Patentansprüche

1. Verfahren zur Speisung eines Motors mit Brennstoff, wobei der Motor zwei Gruppen (11, 12) von Zylindern für den Antrieb von einen gasförmigen Brennstoff transportierenden Schiffen aufweist und das Verfahren darin besteht, eine erste Gruppe (1) von Zylindern stets mit einem Brennstoff und die andere Gruppe (12) von Zylindern selektiv entweder mit diesem Brennstoff oder einem anderen Brennstoff zu speisen.

2. Verfahren nach Anspruch 1, das darin besteht, die erste Gruppe (11) von Zylindern mit einem flüssigen Brennstoff zu speisen.

3. Verfahren nach Anspruch 1, das darin besteht, die erste Gruppe (11) von Zylindern mit einem gasförmigen Brennstoff zu speisen.

4. Verfahren zur Speisung eines Verbrennungsmotors zum Antrieb von einen gasförmigen Brennstoff transportierenden Schiffen, wobei der Motor drei Gruppen (11, 12, 13) von Zylindern aufweist und das Verfahren darin besteht, die erste Gruppe (11) und die zweite Gruppe (13) von Zylindern stets mit einem Brennstoff zu speisen, wobei die erste Gruppe (11) von Zylindern mit einem gasförmigen und die zweite Gruppe (13) von Zylindern mit einem flüssigen Brennstoff gespeist wird, und wobei das Verfahren weiter darin besteht, die dritte Gruppe (12) von Zylindern selektiv entweder mit dem flüssigen oder mit dem gasförmigen Brennstoff zu speisen.

5. Verfahren nach Anspruch 4, das darin besteht, die erste (11) und die dritte Gruppe (12) von Zylindern in einem ersten Motor und die zweite Gruppe (13) von Zylindern in einem zweiten Motor zusammenzufassen.

6. Verfahren zur Speisung eines Verbrennungsmotors zum Antrieb von einen gasförmigen Brennstoff transportierenden Schiffen, wobei der Motor vier Gruppen (11, 12, 13A und 13B) von Zylindern aufweist und das Verfahren darin besteht, eine erste Gruppe (11), eine zweite Gruppe (13A) und eine dritte Gruppe (13B) von Zylindern stets mit einem Brennstoff zu speisen, wobei die erste Gruppe (11) von Zylindern mit einem gasförmigen Brennstoff gespeist wird, die zweite Gruppe (13A) und die dritte Gruppe (13B) von Zylindern mit einem flüssigen Brennstoff gespeist werden und die vierte Gruppe (12) von Zylindern selektiv entweder mit dem flüssigen oder mit dem gasförmigen Brennstoff gespeist wird, wobei die erste (11) und die zweite Gruppe (13A) von Zylindern in einem ersten Motor und die dritte (13B) und die vierte Gruppe (12) von Zylindern in einem zweiten Motor zusammengefaßt sind.
